# EUROPEAN PATENT APPLICATION

(11) **EP 4 700 993 A1**
(43) Date of publication of application: **25.02.2026**
(21) Application number: 24894513.1
(22) Date of filing: 14.11.2024
(51) Int. Cl.: H01R 11/28, H01M 50/284, H01M 10/42, H01R 12/77

(54) **BATTERY PACK**

(30) Priority: 22.11.2023 KR 20230163261
(71) Applicant: LG Energy Solution, Ltd., Seoul 07335 (KR)
(72) Inventor: JO, Yongmin, Daejeon 34122 (KR); PARK, Hye Jin, Daejeon 34122 (KR)
(74) Representative: Plasseraud IP
(86) International application number: PCT/KR2024/017976
(87) International publication number: WO 2025/110620

(57) **Abstract**

Provided is a battery pack. The battery pack according to one aspect of the present invention comprises: a pack housing; a printed circuit board (PCB) for a battery management system (BMS), the PCB being mounted on the pack housing; and a flexible flat cable (FFC) connected to the PCB. The FFC includes: a plurality of conductive wires arranged in parallel; a sheath portion covering the plurality of conductive wires; and a concave-convex portion that is protruding or recessed from the outer circumferential surface of the sheath portion and includes a region extending in a direction that is not parallel to the longitudinal direction of the plurality of conductive wires.

## Description

### Technical Field

The present disclosure relates to a battery pack. More specifically, the present disclosure relates to a battery pack, including a battery management system (BMS) and a flexible flat cable (FFC) connected thereto, which is capable of preventing a dew condensation from entering a cable connector provided at the battery management system by traveling along the flexible flat cable.

### Background Art

A lithium secondary battery is a battery that stores and generates electrical energy by intercalation and deintercalation of lithium ions in positive and negative electrodes.

Recently, lithium secondary batteries have been widely used, not only in small devices such as portable electronic devices but also in medium-and-large-scale devices, such as electric vehicles and energy storage systems (ESS) for operation or energy storage.

As one form of a power device using such lithium secondary battery, a configuration in which a number of battery cells are electrically connected and stored together within a module case to form a battery module, and a number of battery modules are electrically connected and stored together within a battery pack housing to form a battery pack is widely used.

Such battery module or battery pack include a sensing member for measuring the voltage and temperature of a plurality of battery cells, a battery management system (BMS) that may be responsible for voltage balancing and temperature control function, and a cable and a connector for transmitting the voltage and temperature information from the sensing member to the BMS. In particular, for the cable, a flexible flat cable (FFC) is widely used as the cable is highly usable as it is lightweight, bends flexibly, and is more space-efficient than round cables, which occupy more space.

However, since the battery pack is exposed to different environmental conditions, various problems may occur. In particular, condensation may occur on an internal composition of the battery pack and on the cable as the outdoor air temperature decrease.

However, flexible flat cables used in related art battery packs have a smooth surface with no uneven regions, which allows a dew condensation formed on an internal composition of the battery pack and dropped onto the cable or a dew condensation formed on the cable to travel along the cable and enter the connector of the BMS, which has been a cause for a short-circuit.

### Detailed Description of the Invention

### Technical Goals

It is a technical object of the present disclosure, devised to solve at least some of the problems of the related art, to provide a battery pack capable of preventing a dew condensation formed on an internal component of a battery pack and dropped onto a cable and/or a dew condensation formed on a cable from entering a connector of a BMS by traveling along the cable, and thereby preventing a short-circuit occurring at the connector.

### Technical solutions

According to an aspect, there is provided a battery pack including a pack housing, a printed circuit board (PCB) for a battery management system (BMS) mounted in the pack housing, and a flexible flat cable (FFC) connected to the printed circuit board.

Here, the flexible flat cable may include a plurality of conductive wires arranged in parallel, a covering portion covers the plurality of conductive wires, and an uneven portion including an area that is protruded or recessed from an outer peripheral surface of the covering portion but extended not parallel to a length direction of the plurality of conductive wires.

Through this, a dew condensation formed on an internal composition of the battery pack and dropped on to a cable and/or a dew condensation formed on the cable traveling along the cable and entering a connector of the battery management system may be prevented and thereby preventing a short-circuit occurring at the connector.

Also, the uneven portion may include first uneven portions provided at each of both width-wide edges of the covering portion, and a second uneven portion extended from at least one of one surface and other surface of the covering portion and between the first uneven portions provided at each of both width-wise edges of the covering portion.

The first uneven portions may protrude from the covering portion, and a surface facing the battery management system of the first uneven portions may be inclined so that a point becomes closer to the battery management system as becoming away from the covering portion.

A surface opposite to the battery management system of the first uneven portions may be inclined so that a point becomes closer to the battery management system as becoming away from the covering portion, and a part at which the surface facing the battery management system and the surface opposite to the battery management system meet may be defined as a tip.

The second uneven portion may protrude from the covering portion, and a surface facing the battery management system of the second uneven portion may be inclined so that a point becomes closer to the battery management system as becoming away from the covering portion.

A surface opposite to the battery management system of the second uneven portion may be inclined so that a point becomes closer to the battery management system as becoming away from the covering portion, and a part at which the surface facing the battery management system and the surface opposite to the battery management system meet may be defined as a tip.

The second uneven portion may be extended obliquely in a width direction of the flexible flat cable.

At least A surface facing the battery management system of the first uneven portion, which is provided on a side closer to the battery management system, of the first uneven portions provided at both end portions of the second uneven portion that is extended obliquely may be inclined so that a point becomes closer to the battery management system as becoming away from the covering portion.

The second uneven portion may be defined in pairs to correspond to both surfaces of the covering portion, and the first uneven portions may be defined to connect each corresponding end of the second uneven portions defined in pairs.

According to another aspect, there is also provided a battery pack, wherein a surface opposite to the battery management system of the first uneven portion, which is provided on a side far from the battery management system, of the first uneven portions provided at both end portions of the second uneven portion that is extended obliquely may be inclined so that a point becomes away from the battery management system as becoming away from the covering portion.

A surface opposite to the battery management system of the second uneven portion that is extended obliquely may be inclined so that a point becomes away from the battery management system as becoming away from the covering portion.

According to still another aspect, there is also provided a battery pack, wherein the second uneven portion may be defined as plurality on at least one of one surface and other surface of the covering portion, one of the plurality of second uneven portions defined on one of one surface and other surface of the covering portion is extended to be closer to one edge of the covering portion in one direction of length directions of the flexible flat cable, and another one is extended to be closer to an opposite edge of the covering portion in one direction of the length directions of the flexible flat cable.

### Effects of the Invention

Through a battery pack according to the present disclosure, it is possible to prevent a dew condensation formed on an internal composition of the battery pack and dropped onto a cable and/or a dew condensation formed on the cable from traveling along the cable and entering a connector of a battery management system, and thereby preventing a short-circuit occurring at the connector.

### Brief Description of Drawings

FIG. 1 is an exploded perspective view of a battery pack and an enlarged view of a connector of a battery management system according to a first example embodiment of the present disclosure.
FIG. 2 is a front view of a flexible flat cable of a battery pack according to a first example embodiment of the present disclosure.
FIG. 3 is a cross-sectional view of a flexible flat cable of a battery pack according to a first example embodiment of the present disclosure.
FIG. 4 is another cross-sectional view of a flexible flat cable of a battery pack according to a first example embodiment of the present disclosure.
FIG. 5 is a view illustrating a case in which a flexible flat cable is connected to a connector in a downward direction in a battery pack according to a first example embodiment of the present disclosure.
FIG. 6 is a front view of a flexible flat cable of a battery pack according to a second example embodiment of the present disclosure.
FIG. 7 is an upside-down view of a flexible flat cable illustrated in FIG. 6.
FIG. 8 is a front view of a flexible flat cable of a battery pack according to a third example embodiment of the present disclosure.
FIG. 9 is a cross-sectional view of a flexible flat cable of a battery pack according to a third example embodiment of the present disclosure.
FIG. 10 is another cross-sectional view of a flexible flat cable of a battery pack according to a third example embodiment of the present disclosure.
FIG. 11 is a view illustrating a case in which a flexible flat cable is connected to a connector in a downward direction in a battery pack according to a third example embodiment of the present disclosure.

### Mode for Carrying Out the Invention

Before example embodiments of the present disclosure is described, terms or words used in the present disclosure and the accompanying claims are not to be limited to general definitions or dictionary definitions, and the terms and words are to be construed under the principle that an inventor may appropriately define a concept of a term in order to describe their invention in the best way. Thus, example embodiments described in the present disclosure and configurations illustrated in the accompanying drawings are merely the most desirable example embodiments and do not represent all of the technical spirit of the present disclosure, and it should be understood that various equivalents and modifications that may replace the example embodiments and configurations may be present at the time of filing the application of the present disclosure.

The same reference numerals or symbols shown in each drawing of this specification indicate parts or components that perform substantially the same function. For ease of explanation and understanding, different example embodiments may be described using the same reference numerals or symbols. That is, even though components having the same reference numerals are shown in the plurality of drawings, the plurality of drawings do not mean one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that these terms are not to exclude in advance a possibility that one or more other features, numbers, operations, actions, elements, components, or combinations thereof may be present or added.

Also, it should be noted in advance that expressions such as an upper side, an upper surface, a lower side, a lower surface, a side surface, a front surface, or a rear surface is based on directions illustrated in the drawings and that these expressions may change when a direction of a corresponding object changes.

In addition, in the present specification and claims, terms including ordinal numbers such as "first" or "second" may be used to distinguish between elements. These ordinal numbers are used to distinguish the same or similar components from each other, and the meaning of the term should not be limitedly interpreted due to the use of these ordinal numbers. As an example, elements combined with such ordinal numbers should not be construed as limiting the use order or arrangement order by the number. If necessary, each ordinal number may be used interchangeably.

Hereinafter, example embodiments will be described with reference to the drawings. However, the spirit of the present disclosure is not limited to the presented example embodiments. As an example, a person skilled in the art who understands the spirit of the present disclosure may suggest other example embodiments that are included within the scope of the spirit of the present disclosure through addition, change, or deletion, however this is also considered to be included within the scope of the spirit of the present disclosure. The shape and size of elements in the drawings may be exaggerated for more clear description.

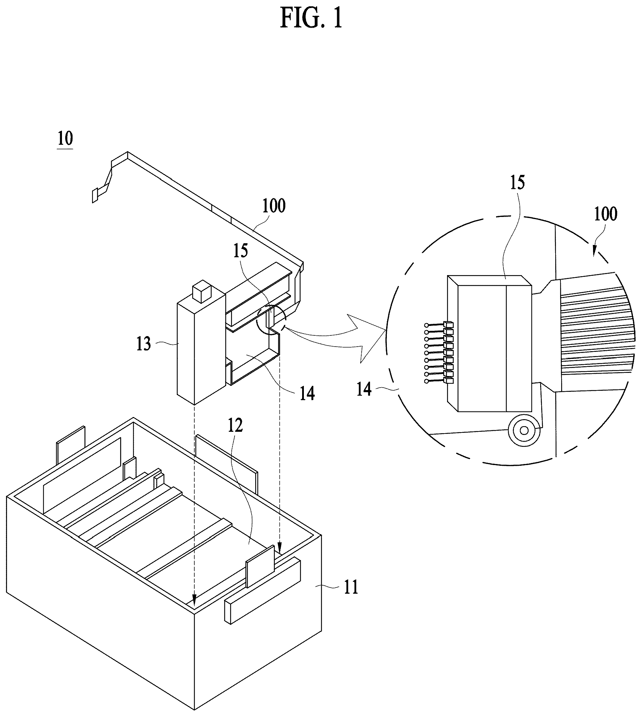

FIG. 1 is an exploded perspective view of a battery pack and an enlarged view of a connector of a battery management system according to a first example embodiment of the present disclosure.

Referring to FIG. 1, a battery pack 10 may include a pack housing 11. In the pack housing 11, a battery management system 13 and a battery cell 12 may be mounted.

The battery pack 10 may include the battery management system 13. The battery management system 13 may include a sensing member for measuring a voltage, a temperature, and the like of the battery cell 12, and may perform voltage balancing and temperature control function.

The battery management system 13 may be mounted in the pack housing 11. The battery management system 13 may be provided at one side of an inner space of the pack housing 11. The battery management system 13 may be mounted in the pack housing 11 in an erect position adjacent to one wall of the pack housing 11. As the battery management system 13 is mounted in the erect position, a printed circuit board (PCB) 14 for the battery management system 13 may be disposed in the pack housing 11 in a vertically erect position in response.

The battery management system 13 may include a connector 15. The connector 15 may be disposed on the printed circuit board 14. The connector 15 may be provided at one edge of the printed circuit board 14. The connector 15 may be provided in an erect position as the printed circuit board 14 is in an erect position. The connector 15 may be disposed to form a connecting portion in a lateral direction. That is, the connector 15 may be disposed in a way that a flexible flat cable 100 may approach or be inserted to be connected from the lateral side of the printed circuit board 14.

The battery pack 10 may include the flexible flat cable 100. The flexible flat cable 100 may be connected to the printed circuit board 14 of the battery management system 13. Specifically, one end of the flexible flat cable 100 may be connected to the connector 15 provided at the printed circuit board 14 of the battery management system 13. Meanwhile, an opposite end of the flexible flat cable 100 may be connected to various sensing members included in the battery management system 13, a controller, and the like.

The flexible flat cable 100 may be connected to or inserted into the connector 15 by approaching from a lateral side of the printed circuit board 14. Here, the flexible flat cable 100 may be, as the connector 15 is in an erect position, connected to the connector 15 in an erect position, that is, in a position in which both edges of the flexible flat cable 100 are in a vertical direction.

However, a position of the connector 15 and a connecting direction of the flexible flat cable 100 are not limited to the above description. As an example, the connector 15 may be provided at an upper edge of the printed circuit board 14 and disposed in a way that the connecting portion is facing upward, and the flexible flat cable 100 may be connected to or inserted into the connector 15 by approaching from an upper side of the printed circuit board 14 in a gravity direction.

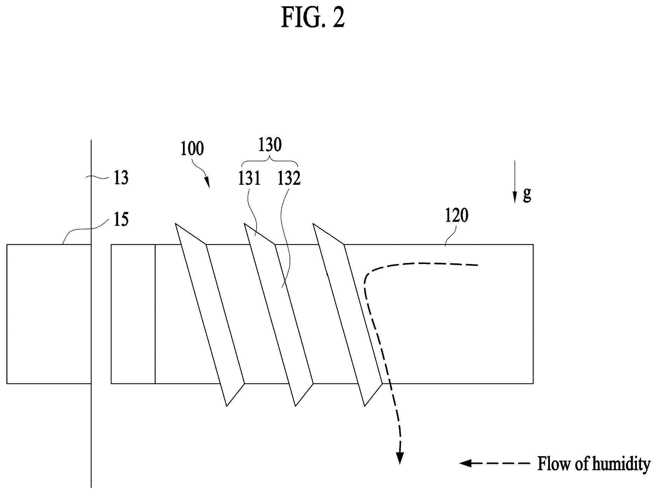

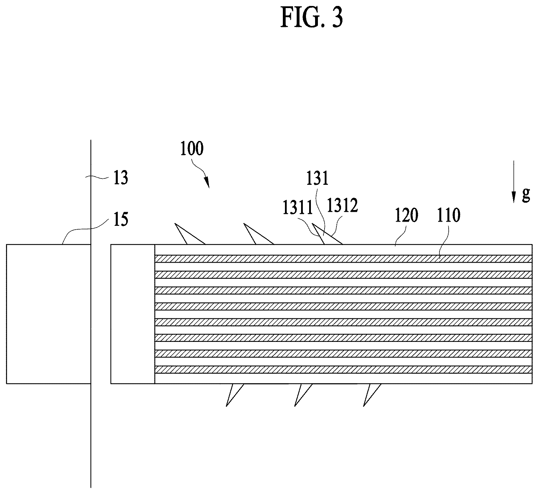

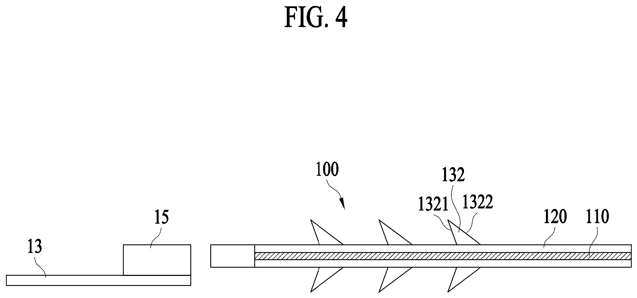

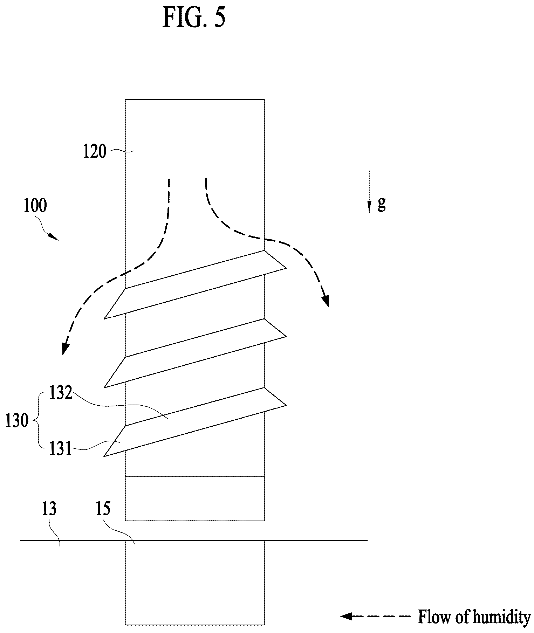

FIG. 2 is a front view of a flexible flat cable of a battery pack according to a first example embodiment of the present disclosure. FIG. 3 is a cross-sectional view of a flexible flat cable of a battery pack according to a first example embodiment of the present disclosure. FIGS. 2 and 3 illustrate a case in which a flexible flat cable is connected to a connector in a horizontal direction in a battery pack according to a first example embodiment of the present disclosure. FIG. 4 is another cross-sectional view of a flexible flat cable of a battery pack according to a first example embodiment of the present disclosure. FIG. 5 is a view illustrating a case in which a flexible flat cable is connected to a connector in a downward direction in a battery pack according to a first example embodiment of the present disclosure.

Hereinafter, the flexible flat cable 100 of the battery pack 10 according to the first example embodiment of the present disclosure may include a plurality of conductive wires 110, a covering portion 120, and an uneven portion 130, but a portion thereof may be excluded and implemented, and other additional configurations are not excluded as well.

Referring to FIGS. 3 and 4, the flexible flat cable 100 may include the plurality of conductive wires 110. The plurality of conductive wires 110 may be arranged in a row in a width direction of the flexible flat cable 100.

The flexible flat cable 100 may include the covering portion 120. The covering portion 120 may cover the plurality of conductive wires 110. Specifically, the covering portion 120 may be formed on one side and other side of a direction in which the plurality of conductive wires 110 are arranged in a row, on a front side and a rear side of the plurality of conductive wires 110, and in a space between each of the plurality of conductive wires 110. The covering portion 120 may be made of a flexible material such as synthetic resin, for example.

Referring to FIGS. 2 through 5, the flexible flat cable 100 may include the uneven portion 130. The uneven portion 130 may be protruded or recessed from an outer peripheral surface of the covering portion 120. The uneven portion 130 may include an area extended not parallel to a length direction of the plurality of conductive wires 110. The uneven portion 130 may block a path through which a humidity, formed by condensation, travels along the covering portion 120 and enters the connector 15, and prevent a short-circuit from occurring at the connector 15 due to factors such as humidity.

As an example of the flexible flat cable 100 of the battery pack according to the first example embodiment of the present disclosure, the flexible flat cable 100 may have the following structure.

The uneven portion 130 may be configured to have a guide structure, resembling a shape of an umbrella generally, that guides a humidity in a directional manner, an inner surface of the umbrella shape facing a terminal that is coupled to the connector 15, and an outer surface facing an opposite side of the terminal that is coupled to the connector 15. This will be described in detail as follows.

The uneven portion 130 may include first uneven portions 131. The first uneven portions 131 may be provided at both edges of the covering portion 120, that is, on each of areas on both sides of the longitudinal edges based on the flat surface of the flexible flat cable 100. The first uneven portions 131 may be formed to be protruded from the covering portion 120.

The first uneven portions 131 may be provided in plurality at each of both edges of the covering portion 120. Through this, an occurrence of short-circuit caused by humidity may be prevented effectively as a humidity entering the connector 15 by traveling along the covering portion 120 may be blocked multiple times. However, without being limited thereto, the first uneven portions 131 may also be provided one each at both edges of the covering portion 120.

Referring to FIG. 3, a surface 1311 facing the battery management system 13 of the first uneven portions 131 may be inclined to face the battery management system 13, that is, in a direction toward the terminal connected to the connector 15, as becoming away from the covering portion 120. That is, based on FIG. 3, a left-side surface 1311, of the two surfaces forming the first uneven portions 131, may be inclined so that a point becomes closer to the battery management system 13 as becoming away from the covering portion 120.

Specifically, as illustrated in FIG. 5, when the flexible flat cable 100 is connected to the connector 15 by approaching the battery management system 13 in a gravity direction g, a humidity formed by condensation may travel along the covering portion 120 in the gravity direction g. Here, when the surface 1311 facing the battery management system 13 of the first uneven portions 131 are inclined so that a point becomes closer to the battery management system 13 as becoming away from the covering portion 120, the humidity traveling over the first uneven portions 131 and traveling aa along the covering portion 120 again may be prevented.

The uneven portion 130 may include a second uneven portion 132. The second uneven portion 132 may be formed on at least one of one surface or other surface of the covering portion 120. The second uneven portion 132 may be extended between the first uneven portions 131 provided at each of both width-wise edges of the covering portion 120. The second uneven portion 132 may be formed to be protruded from the covering portion 120.

The second uneven portion 132 may be provided in plurality. Through this, an occurrence of a short-circuit may be effectively prevented as a humidity entering the connector 15 by traveling along the covering portion 120 may be blocked several times. However, it is not limited thereto, and only one second uneven portion 132 may be provided.

When the second uneven portion 132 is extended obliquely in a width direction of the flexible flat cable 100, the surface 1311 facing the battery management system 13 of the first uneven portions 131, which are at least provided on a side closer to the battery management system 13, of the first uneven portions 131 provided at both end portions of the second uneven portion 132 is inclined so that a point becomes closer to the battery management system 13 as becoming away from the covering portion 120.

Specifically, in the case which the second uneven portion 132 is extended obliquely in the width direction of the flexible flat cable 100, when the flexible flat cable 100 is connected to the connector 15 by approaching the battery management system 13 in the gravity direction g as shown in FIG. 5, a humidity, traveling along the covering portion 120, may be guided to a left path along the second uneven portion 132 which is mostly formed obliquely, and reach the first uneven portions 131 formed on a side closer to the battery management system 13, of the first uneven portions 131 formed at both end portions of the second uneven portion 132. Accordingly, the surface 1311 facing the battery management system 13 of the first uneven portions 131, which are at least provided on a side closer to the battery management system 13, of the first uneven portions 131 provided on both end portions of the second uneven portion 132 may be formed to be inclined towards the battery management system 13 as becoming away from covering portion 120 so that the guided humidity does not travel over the first uneven portions 131.

The surface 1311 facing the battery management system 13 of each of the first uneven portions 131 provided at both edges of the covering portion 120 may be inclined so that a point becomes closer to the battery management system 13 as becoming away from the covering portion 120. Through this, when the flexible flat cable 100 is connected to the connector 15 by approaching the battery management system 13 in the gravity direction g as shown in FIG. 5, a humidity entering the connector 15 by traveling over the first uneven portions 131 may be prevented regardless towards which edge of both edges of the covering portion 120 the humidity is guided to.

Meanwhile, referring to FIG. 3, an opposite surface 1312 facing away from the battery management 13 of the first uneven portions 131 may be inclined so that a point becomes closer to the battery management system 13 as becoming away from the covering portion 120. Through this, as a surface 1312 opposite to the battery management system 13 of the first uneven portions 131 and an adjacent edge of the covering portion 120 form an obtuse angle, a humidity entering by traveling along the covering portion 120 may smoothly travel to the surface 1312 opposite to the battery management system 13 of the first uneven portions 131 and guided toward an end portion of the first uneven portions 131 and fall off the flexible flat cable 100.

A part at which the surface 1311 facing the battery management system 13 of the first uneven portions 131 and the surface 1312 opposite to the battery management system 13 of the first uneven portions 131 meet may be formed as a tip. That is, based on FIG. 3, it is to be understood that the end portion of the first uneven portions 131 are formed as a tip. If, in case the flexible flat cable 100 is connected to the connector 15 by approaching the battery management system 13 in the gravity direction g as shown in FIG. 5, the part at which the surface 1311 facing the battery management system 13 of the first uneven portions 131 and the surface 1312 opposite to the battery management system 13 of the first uneven portions 131 meet is formed to be blunt, a portion of a humidity may continue to travel along the covering portion 120 after traveling over the first uneven portions 131. Alternatively, when the end portion of the first uneven portions 131 are formed as a tip, a humidity traveled along the surface 1312 opposite to the battery management system 13 of the first uneven portions 131 may be easily fall off the flexible flat cable 100 at the end portion of the first uneven portions 131.

Referring to FIG. 4, a surface 1321 facing the battery management system 13 of the second uneven portion 132 may be inclined so that a point becomes closer to the battery management system 13 as becoming away from the covering portion 120. That is, based on FIG. 4, a left-side surface 1321, of the two surfaces forming the second uneven portion 132, may be inclined so that a point becomes closer to the battery management system 13 as becoming away from the covering portion 120.

Specifically, as illustrated in FIG. 5, when the flexible flat cable 100 is connected to the connector 15 by approaching the battery management system 13 in the gravity direction g, a humidity formed by condensation may travel along the covering portion 120 in the gravity direction g. Here, when the surface 1321 facing the battery management system 13 of the second uneven portion 132 is inclined towards the battery management system 13 as becoming away from the covering portion 120, the humidity traveling over the second uneven portion 132 and traveling downward along the covering portion 120 again may be prevented.

A surface 1322 opposite to the battery management system 13 of the second uneven portion 132 may be inclined towards the battery management system 13 as becoming away from the covering portion 120. Through this, as the surface 1322 opposite to the battery management system 13 of the second uneven portion 132 and one surface or other surface of the covering portion 120 adjacent thereto form an obtuse angle, a humidity entering by traveling along the covering portion 120 may smoothly travel to the surface 1322 opposite to the battery management system 13 of the second uneven portion 132, guided to an end portion of the second uneven portion 132, and fall off the flexible flat cable 100.

A part at which the surface 1321 facing the battery management system 13 of the second uneven portion 132 and the surface 1322 opposite to the battery management system 13 of the second uneven portion 132 meet may be formed as a tip. That is, based on FIG. 4, it is to be understood that the end portion of the second uneven portion 132 may be formed as a tip. Through this, a humidity entered by traveling along the surface 1322 opposite to the battery management system 13 of the second uneven portion 132 may be easily fall off from the flexible flat cable 100 at the end portion of the second uneven portion 132 without traveling over the surface 1321 of facing the battery management system 13 the second uneven portion 132.

Referring to FIG. 2, the second uneven portion 132 may be extended obliquely in a width direction of the flexible flat cable 100. The flexible flat cable 100, as illustrated in FIG. 2, may be connected to the connector 15 by approaching the battery management system 13 from a lateral side, and here, the flexible flat cable 100 may be connected to the connector 15 in an erect position in a direction in which a lower end of the second uneven portion 132 is disposed far from the battery management system 13 than an upper end of the second uneven portion 132. Through this, a flow of a humidity, approaching the battery management system 13 by traveling along the covering portion 120, may be blocked by the second uneven portion 132 and fall off toward a side far from the battery management system 13 along an angle of the second uneven portion 132.

The second uneven portion 132 may be formed in pairs to correspond to both surfaces of the covering portion 120. That is, the second uneven portion 132 of one surface of the covering portion 120 and the second uneven portion 132 of other surface of the covering portion 120 may be provided mirror symmetrically. In addition, the first uneven portions 131 provided at both edges of the covering portion 120 may be formed to connect each corresponding end of the second uneven portions 132 formed in pairs. In other words, the uneven portion 130 including the first uneven portions 131 and the second uneven portion1 132 may be provided to form a closed curve around the covering portion 120. Through the structure, as the uneven portion 130, after a ring-shaped uneven portion member is mounted on an outer peripheral surface of the covering portion 120, may be formed by joining the ring-shaped member and the covering portion 120 together, the flexible flat cable 100 for preventing a humidity from entering the connector 15 may be easily manufactured.

However, a method of forming the uneven portion 130 may not be limited thereto. As an example, the uneven portion 130 may be extruded in a predetermined shape in an extrusion process of the covering portion 120. In addition, when the uneven portion 130 is formed to be recessed from the covering portion 120, the uneven portion 130 may be formed by applying a pressure or heat to the outer peripheral surface of the covering portion 120.

The uneven portion 130 may be formed to be identical to a material of the covering portion 120. In particular, this may be the case when the uneven portion 130 is formed by applying a pressure to the covering portion 120 or when the covering portion 120 and the uneven portion 130 are formed simultaneously (e.g., press method).

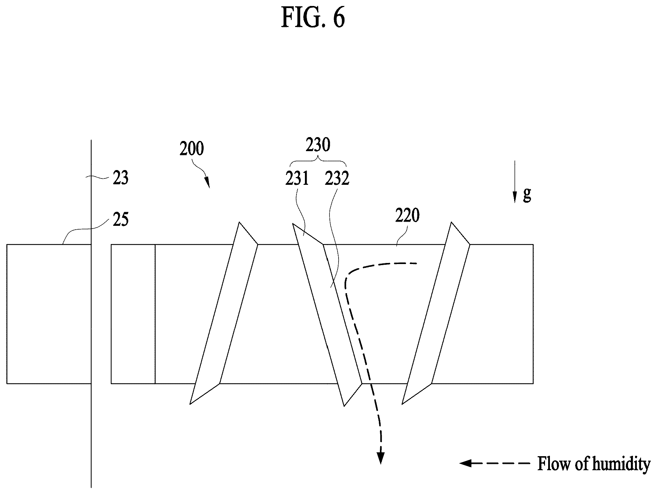

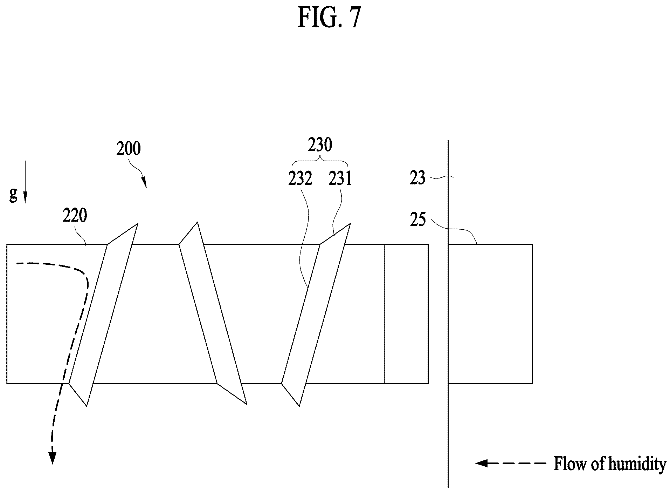

FIG. 6 is a front view of a flexible flat cable of a battery pack according to a second example embodiment of the present disclosure. FIG. 7 is an upside-down view of a flexible flat cable illustrated in FIG. 6.

Specifically, FIGS. 6 and 7 illustrate a flexible flat cable 200 viewed from one surface of a covering portion 220, and especially FIG. 6 is a view illustrating the flexible flat cable 200 connected to a connector 25 of a battery management system 23 disposed on the left side, and FIG. 7 is a view illustrating the flexible flat cable 200 connected to the connector 25 of the battery management system 23 disposed on the right side.

The detailed configuration of the flexible flat cable 200 of the battery pack according to the second example embodiment of the present disclosure that is not described below may be identical to the detailed configuration of the flexible flat cable 100 of the battery pack according to the first example embodiment of the present disclosure.

Especially, an uneven portion 230 may be configured to have a guide structure, resembling a shape if an umbrella generally, that guides a humidity in a directional manner, an inner surface of the umbrella shape facing a terminal that is coupled to the connector 25, and an outer surface facing an opposite side of the terminal that is coupled to the connector 25. This is identical to the characteristics of the first example embodiment above.

Referring to FIG. 6, a second uneven portion 232 may be formed in plurality on at least one of one surface and other surface of the covering portion 220. Here, one of the plurality of second uneven portions 232 formed on one surface or other surface of the covering portion 220 may be extended to be closer to one width-wise edge of the covering portion 220 in one direction of length directions of the flexible flat cable 200, and another one is extended to be closer to an opposite edge of the covering portion 220 in one direction of the length directions of the flexible flat cable 200. In other words, it may be understood that the plurality of the second uneven portions 232 are formed by two second uneven portions 232 that are obliquely formed in a width direction of the flexible flat cable 200 are extended obliquely in a direction opposite to each other.

Through this, regardless whether the flexible flat cable 200 is connected to the battery management system 23 by approaching from the right side or connected to the battery management system 23 by approaching from the left side, the plurality of second uneven portions 232 may include the second uneven portion 232 that is inclined so that a lower end is disposed far from the battery management system 23 than an upper end. As an example, it may be understood that the second uneven portion 232 second from the left side in FIG. 6 and the second uneven portions 232 first and third from the right side in FIG. 7 correspond to this. Through this, a humidity entering the connector 25 may be prevented effectively as it is possible to drop the humidity away from the battery management system 23 regardless a connection direction of the flexible flat cable 200.

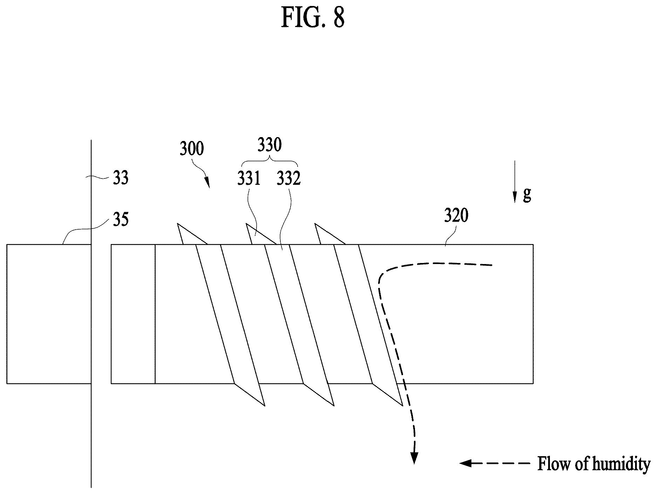

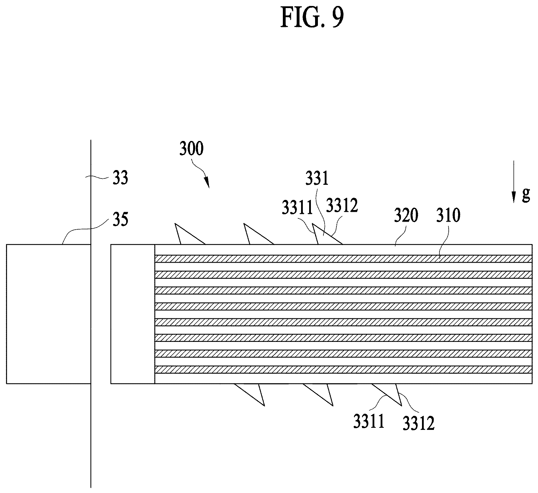

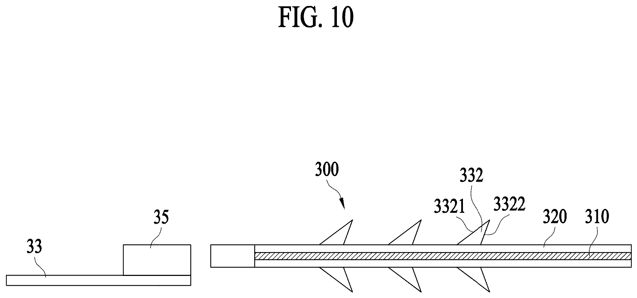

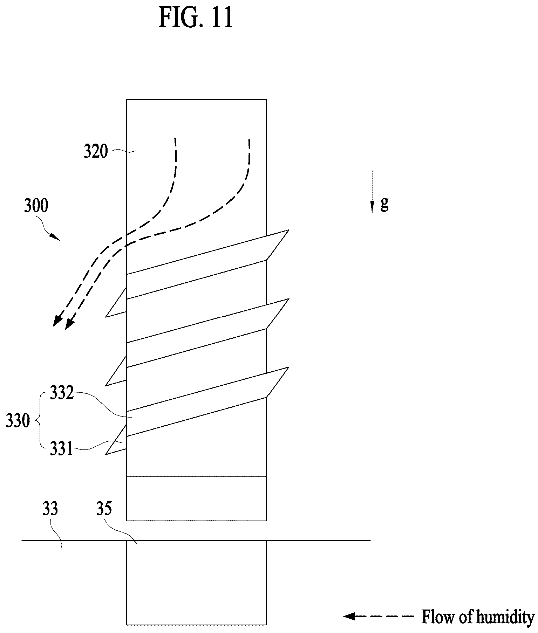

FIG. 8 is a front view of a flexible flat cable of a battery pack according to a third example embodiment of the present disclosure. FIG. 9 is a cross-sectional view of a flexible flat cable of a battery pack according to a third example embodiment of the present disclosure. FIGS. 8 and 9 illustrate a case in which the flexible flat cable is connected to a connector in a horizontal direction in a battery pack according to a third example embodiment of the present disclosure. FIG. 10 is another cross-sectional view of a flexible flat cable of a battery pack according to a third example embodiment of the present disclosure. FIG. 11 is a view illustrating a case in which a flexible flat cable is connected to a connector in a downward direction in a battery pack according to a third example embodiment of the present disclosure.

The detailed configuration of a flexible flat cable 300 of the battery pack according to the third example embodiment of the present disclosure that is not described below may be identical to the detailed configurations of the flexible flat cable 100 of the battery pack according to the first example embodiment of the present disclosure and the flexible flat cable 200 of the battery pack according to the second example embodiment of the present disclosure.

A difference with the first example embodiment and the second example embodiment is that a third uneven portion 330 may be configured, while having a guide structure resembling a shape of an umbrella that guides a humidity in a directional manner, to form a valley at which the humidity formed is collected by configuring an inner surface of the umbrella shape, in an area other than an end portion towards the connector 35 , of uneven portions 330 to face an opposite side of a terminal connected to the connector 35. This will be described in detail below.

Referring to FIGS. 8 and 9, a surface 3312 opposite to a battery management system 33 of a first uneven portion 331, which is provided on a side far from the battery management system 33, of the first uneven portions 331 provided at both end portions of a second uneven portion 332 that is extended obliquely may be inclined so that a point becomes away from the battery management system 33 as becoming away from a covering portion 320. Also, referring to FIGS. 8 through 10, the surface 3312 opposite to the battery management system 33 of the second uneven portion 332 that is extended obliquely may be inclined so that a point becomes away from the battery management system 33 as becoming away from the covering portion 320.

In other words, it may be understood that a cross-sectional shape of the first uneven portion 331, which is provided on a side closer to the battery management system 33, of the first uneven portions 331 provided at both end portions of the second uneven portion 332, and a cross-sectional shape of the first uneven portion 331 and the second uneven portion 332, provided on a side far from the battery management system 33, from the first uneven portions 331 provided at both end portions of the second uneven portion 332 are formed in opposition direction to each other. Based on one continued uneven portion 330 of FIG. 8, an inner side of the umbrella of the first uneven portion 331 provided on a side closer to the battery management system 33 faces the left side, and an inner side of the umbrella of the first uneven portion 331 and the second uneven portion 332 provided on a side far from the battery management system 33 face the right side.

Specifically, as illustrated in FIG. 11, when the flexible flat cable 300 is connected to a connector 35 by approaching to the battery management system 33 in the gravity direction g, a humidity traveling down along the covering portion 320 in the gravity direction g may be guided to travel to the first uneven portion 331 on the left side by the first uneven portion 331on the right side and the second uneven portion 332, and the guided humidity may fall off the flexible flat cable 300 from the first uneven portion 331 on the left side.

More specifically, since the surface 3312 and a surface 3322 opposite to the battery management system 33 of the first uneven portion 331 on the right side and the second uneven portion 332 respectively and an adjacent edge and surface of the covering portion may form an acute angle with each other, the humidity traveling down along a surface and a right-side edge of the covering portion 320 may not be able to travel over the first uneven portion 331 on the right side and the second uneven portion 332 and guided to the first uneven portion 331 on the left side by traveling along the valley formed between the second uneven portion 332 and the surface of the covering portion 320. Through the structure, since it is possible to predict a dropping point of a humidity more easily, a short-circuit caused by a humidity may be prevented effectively through an appropriate design of the battery management system 33.

In addition, as illustrated in FIG. 8, even when the flexible flat cable 300 is connected to the connector 35 by approaching the battery management system 33 from a lateral side, because a tip of the first uneven portion 331 disposed below in the gravity direction g faces an opposite side of the battery management system 33, the humidity may drop away from the battery management system 33 and a short-circuit caused by the humidity may be prevented effectively.

Any example embodiment of the present disclosure described above or other example embodiments are not mutually exclusive or distinct from each other. Each configuration or function of any example embodiments of the present disclosure described above or other example embodiments may be combined or used in combination.

As an example, it may indicate that a configuration A described in a particular example embodiment and/or a drawing may be combined with a configuration B described in another example embodiment and/or a drawing. That is, even if the combination between the configurations is not directly explained, it means that the combination is possible except for the case where the combination is described as impossible.

The above detailed description should not be construed as restrictive in all aspects and should be considered as illustrative. The scope of the present disclosure should be determined by reasonable interpretation of the appended claims, and all changes within the equivalent scope of the present invention are included in the scope of the present disclosure.

### Description of symbols

10: Battery pack
11: Pack housing
12: Battery cell
13, 23, 33: Battery management system
14: Printed circuit board
15, 25, 35: Connector
100, 200, 300: Flexible flat cable
110: Conductive wire
120, 220, 320: Covering portion
130: Uneven portion
131, 331: First uneven portion
1311, 3311: Surface facing battery management system of first uneven portion
1312, 3312: Surface opposite to battery management system of first uneven portion
132, 232, 332: Second uneven portion
1321, 3321: Surface facing battery management system of second uneven portion
1322, 3322: Surface opposite to battery management system of second uneven portion

## Claims

1. A battery pack comprising:
a pack housing;
a printed circuit board (PCB) for a battery management system (BMS) mounted in the pack housing; and
a flexible flat cable (FFC) connected to the printed circuit board,
wherein the flexible flat cable comprises:
a plurality of conductive wires arranged in parallel;
a covering portion covers the plurality of conductive wires; and
an uneven portion protruded or recessed from an outer peripheral surface of the covering portion, including an area that is but extended not parallel to a length direction of the plurality of conductive wires.

2. The battery pack of claim 1, wherein the uneven portion comprises:
a first uneven portions provided at each of both width-wise edges of the covering portion; and
a second uneven portion extended from at least one of one surface and other surface of the covering portion and between the first uneven portions provided at each of the both width-wise edges of the covering portion.

3. The battery pack of claim 2, wherein the first uneven portions protruded from the covering portion, and
a surface facing the battery management system of the first uneven portions is inclined so that a point becomes closer to the battery management system as becoming away from the covering portion.

4. The battery pack of claim 3, wherein a surface opposite to the battery management system of the first uneven portions is inclined so that a point becomes closer to the battery management system as becoming away from the covering portion, and
a part at which the surface facing the battery management system and the surface opposite to the battery management system meet is defined as a tip.

5. The battery pack of claim 2, wherein the second uneven portion protruded from the covering portion, and
a surface facing the battery management system of the second uneven portion is inclined so that a point becomes closer to the battery management system as becoming away from the covering portion.

6. The battery pack of claim 5, wherein a surface opposite to the battery management system of the second uneven portion is configured to be inclined so that a point becomes closer to the battery management system as becoming away from the covering portion, and
a part at which the surface facing the battery management system and the surface opposite to the battery management system meet is defined as a tip.

7. The battery pack of claim 2, wherein the second uneven portion is extended obliquely in a width direction of the flexible flat cable.

8. The battery pack of claim 7, wherein at least a surface facing the battery management system of the first uneven portions, which are provided on a side closer to the battery management system, of the first uneven portions provided at both end portions of the second uneven portion that is extended obliquely is inclined so that a point becomes closer to the battery management system as becoming away from the covering portion.

9. The battery pack of claim 7, wherein a surface opposite to the battery management system of the first uneven portions, which is provided on a side far from the battery management system, of the first uneven portions provided at both end portions of the second uneven portion that is extended obliquely is inclined so that a point becomes away from the battery management system as becoming away from the covering portion.

10. The battery pack of claim 9, wherein a surface opposite to the battery management system of the second uneven portion that is extended obliquely is inclined so that a point becomes away from the battery management system as becoming away from the covering portion.

11. The battery pack of claim 2, wherein the second uneven portion is defined as a plurality on at least one of one surface and the other surface of the covering portion,
one of the plurality of second uneven portions defined on one of the one surface and the other surface of the covering portion is extended to be closer to one edge of the covering portion in one direction of length directions of the flexible flat cable, and
another one is extended to be closer to an opposite edge of the covering portion in one direction of the length directions of the flexible flat cable.

12. The battery pack of claim 2, wherein the second uneven portion is defined in pairs to correspond to both surfaces of the covering portion, and
the first uneven portions are defined to connect each corresponding end of the second uneven portions defined in pairs.
